Europäisches Patentamt

European Patent Office

Office européen des brevets

(11) Numéro de publication: **0 363 266**
**A1**

## (12) DEMANDE DE BREVET EUROPEEN

(21) Numéro de dépôt: 89402707.7

(22) Date de dépôt: 02.10.89

(51) Int. Cl.⁵· **G21C 19/10**

(30) Priorité: 03.10.88 FR 8812897

(43) Date de publication de la demande:
**11.04.90 Bulletin 90/15**

(84) Etats contractants désignés:
**DE GB**

(71) Demandeur: **COMMISSARIAT A L'ENERGIE ATOMIQUE**
**31/33, rue de la Fédération**
**F-75015 Paris(FR)**

(72) Inventeur: **Thevenot, Louis-Pierre**
**Donatello 2 Les Jardins de la Torse**
**F-13100 Aix en Provence(FR)**

(74) Mandataire: **Mongrédien, André et al**
**c/o BREVATOME 25, rue de Ponthieu**
**F-75008 Paris(FR)**

(54) **Ringard de transfert d'assemblages de combustible nucléaire et réacteur nucléaire comportant un tel ringard.**

(57) Pour permettre le transfert d'assemblages de combustible nucléaire irradiés au-dessus d'un liquide de refroidissement dans lequel baignent normalement ces assemblages, tout en assurant leur refroidissement, il est proposé un ringard (10) comportant un tube guide (12) formé de deux parois coaxiales (12a, 12b) entre lesquelles circule de bas en haut le liquide prélevé à la partie inférieure du tube guide par une pompe (38) ou un système équivalent. Le liquide de refroidissement s'écoule ensuite par gravité dans l'assemblage (16) suspendu en grappin (14) logé dans le tube guide. Un tel ringard, utilisé dans un réacteur nucléaire à neutrons rapides, réduit de façon sensible la hauteur de la cuve du réacteur et, par conséquent, le coût de ce dernier.

FIG.1

# Ringard de transfert d'assemblages de combustible nucléaire et réacteur nucléaire comportant un tel ringard.

L'invention concerne un ringard de transfert d'assemblages de combustible nucléaire, à circulation de liquide de refroidissement, ainsi qu'un réacteur nucléaire tel qu'un réacteur à neutrons rapides, dans lequel la manutention des assemblages s'effectue au moyen d'au moins un ringard de ce type.

Dans les réacteurs nucléaires à neutrons rapides, le coeur du réacteur est placé dans une cuve d'axe vertical, obturée par une dalle à son extrémité supérieure et remplie d'un métal liquide tel que du sodium. Les assemblages de combustible nucléaire irradiés dans le coeur du réacteur doivent être remplacés périodiquement par des assemblages neufs. Cette opération est habituellement effectuée à l'aide d'un système de levage à bras, suspendu à la dalle par l'intermédiaire de deux bouchons tournants excentrés. Des rotations appropriées de ces bouchons tournants permettent d'amener le bras du système de levage à la verticale de l'un quelconque des assemblages du coeur et à la verticale d'un poste de déchargement, généralement extérieur au coeur du réacteur (P.C.D.R.).

Grâce à cette installation, les assemblages irradiés peuvent être tranférés un à un à l'aide du système de levage et amenés jusqu'au poste de déchargement, à partir duquel ils sont évacués hors de la cuve à l'aide d'un pot de transfert circulant sur des rampes reliées par un sas situé au-dessus de la dalle du réacteur. Des assemblages neufs sont ensuite placés dans le coeur en suivant le même trajet en sens inverse.

Dans les installations actuelles, l'utilisation d'un système de levage à bras impose, pour des raisons géométriques, que la distance séparant le bas de la dalle du niveau supérieur du coeur soit au moins égale à la hau teur d'un assemblage.

De plus, pour que le refroidissement des assemblages irradiés à forte puissance résiduelle s'effectue correctement lors de leur transfert, il est également indispensable que le niveau du métal liquide dans la cuve lors de la manutention soit tel que la partie fissile de l'assemblage reste immergée.

Ces deux impératifs conduisent à donner à la cuve une hauteur très importante qui accroît sensiblement le coût du réacteur dans son ensemble.

La présente invention a précisément pour objet un système de transfert d'un type nouveau, conçu notamment pour être utilisé dans un réacteur nucléaire à neutrons rapides à la place des systèmes de transfert à bras utilisés actuellement, afin de permettre une diminution sensible de la hauteur de la cuve d'un tel réacteur.

Il est important de noter que ce système de transfert peut cependant être utilisé pour assurer la manutention des assemblages dans des réacteurs d'un autre type et en dehors de ces réacteurs.

Selon l'invention, ces objectif est atteint au moyen d'un ringard rectiligne de transfert d'assemblages de combustible nucléaire, comprenant un tube guide vertical dans lequel coulisse un grappin, caractérisé par le fait que des moyens d'alimentation sont prévus pour acheminer un liquide de refroidissement dans une partie supérieure du tube guide, afin que ce liquide s'écoule par gravité dans un assemblage suspendu au grappin et placé dans le tube guide.

Selon un mode de réalisation préféré de l'invention, le tube guide comprend deux parois coaxiales définissant entre elles un espace annulaire par lequel lesdits moyens d'alimentation acheminent le liquide de refroidissement dans la partie supérieure du tube guide.

De préférence, l'espace annulaire défini entre les deux parois coaxiales du tube guide débouche alors dans une chambre formée dans la partie supérieure de ce dernier, cette chambre étant délimitée vers le bas par une plaque annulaire servant de butée haute au grappin à l'intérieur du tube guide.

Avantageusement, le grappin est surmonté par un réceptacle conçu avec un jeu déterminé à l'intérieur du tube guide et dont un bord supérieur est en appui sur la plaque annulaire lorsque le grappin est en position haute, des passages étant prévus dans le fond du réceptacle pour faire communiquer ce dernier avec l'intérieur d'un assemblage suspendu au grappin.

En pratique, le réceptacle surmontant le grappin doit être maintenu plein de liquide de refroidissement afin de garantir un refroidissement efficace de l'assemblage. Il peut en résulter un débit excessif du liquide alimentant la chambre formée dans la partie supérieure du tube guide. Des orifices de déversement peuvent alors être formés dans le tube guide, pour définir un niveau maximum de liquide dans la partie supérieure de ce dernier.

Les moyens d'alimentation permettant d'alimenter en liquide de refroidissement la partie supérieure du tube guide peuvent être constitués soit par des moyens de pompage refoulant le liquide dans cette partie, soit par des moyens de mise en dépression de cette partie du tube guide, soit par ces deux moyens combinés, le moyen de mise en dépression constituant alors un système de secours en cas de défaillance des moyens de pompage.

L'invention a également pour objet un réacteur nucléaire comprenant une cuve obturée par une dalle horizontale portant deux bouchons tournants, cette cuve contenant des assemblages de combustible nucléaire juxtaposés, formant le coeur du réacteur, ainsi qu'un liquide de refroidissement dans lequel sont noyés ces assemblages, au moins un système de transfert suspendu aux bouchons tournants, par l'intermédiaire d'un mécanisme apte à déplacer ce système entre une position située à la verticale d'un assemblage et une position située à la verticale d'un poste de déchargement extérieur au coeur, caractérisé par le fait que le système de transfert est un ringard rectiligne conforme à l'invention et que les assemblages ont une longueur supérieure à la distance séparant la dalle de la face supérieure du coeur.

L'utilisation d'un ringard conforme à l'invention dans un tel réacteur permet à la fois de supprimer les contraintes de dimensionnement de la cuve liées à l'utilisation d'un système de transfert à bras et de garantir un refroidissement satisfaisant des assemblages irradiés, tout en permettant de placer la partie fissile des assemblages au-dessus du niveau de métal liquide dans la cuve lors de la manutention. Ces avantages combinés conduisent à une réduction de hauteur appréciable de la cuve, par exemple d'environ 3 m.

Un mode de réalisation préféré de l'invention va a présent être décrit, à titre d'exemple non limitatif, en se référant aux dessins annexés dans lesquels :

    - la figure 1 est une vue en coupe longitudinale schématique d'un ringard de transfert conforme à l'invention, auquel est accroché un assemblage de combustible nucléaire ; et

    - la figure 2 est une vue de côté et en coupe représentant schématiquement un réacteur nucléaire à neutrons rapides comportant un ringard de transfert analogue au ringard de la figure 1.

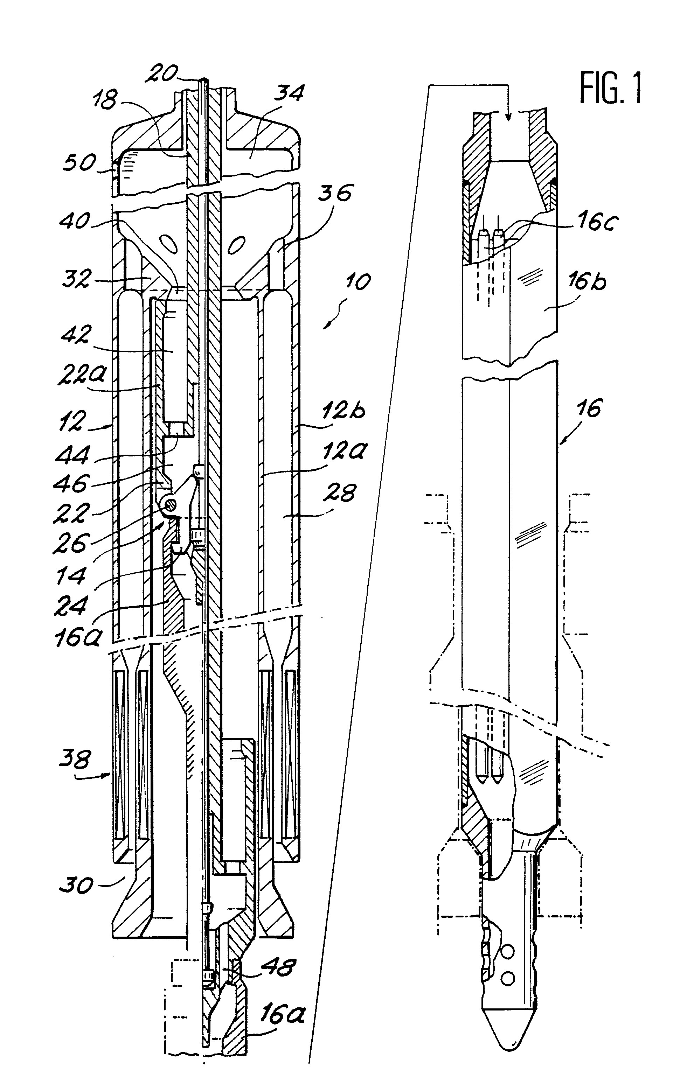

Sur la figure 1, la référence 10 désigne de façon générale la partie inférieure d'un ringard de transfert conforme à l'invention. Cette partie 10 du ringard se compose principalement d'un tube guide 12, d'axe vertical, et d'un grappin 14 apte à se déplacer selon cet axe à l'intérieur du tube guide. Ce grappin 14 est représenté respectivement dans ses positions extrêmes haute et basse sur les parties gauche et droite du ringard 10. Lorsque le grappin 14 est en position haute, un assemblage de combustible nucléaire 16 accroché à ce ringard peut être logé en totalité à l'intérieur du tube guide 12.

De façon connue, le ringard de transfert selon l'invention comporte dans sa partie supérieure (non représentée) un dispositif de levage permettant de déplacer le grappin 14 entre ses positions extrêmes haute et basse. Dans l'exemple de réalisation représenté, ce dispositif est un treuil qui actionne un tube de levage rigide 18 disposé coaxialement à l'intérieur du tube guide 12.

Le ringard de transfert selon l'inention comporte également dans sa partie supérieure (non représentée) un système permettant de commander à distance l'actionnement et le relâchement du grappin 14. Dans l'exemple de réalisation représenté, ce système agit sur une tige 20 disposée coaxialement à l'intérieur du tube de levage 18 et dont l'extrémité inférieure actionne le grappin 14.

De façon connue, le grappin 14 comprend un corps 22 fixé à l'extrémité inférieure du tube de levage 18 et dans lequel sont articulés des doigts de préhension 24, par des axes 26 orientés perpendiculairement à l'axe vertical du ringard. Lorsque la tige d'actionnement 20 du ringard 14 est en position haute, les doigts 24 sont escamotés à l'intérieur du corps 22, de telle sorte que le grappin 14 peut être introduit dans la tête 16a d'un assemblage 16. Au contraire, lorsque la tige 20 est en position basse, les doigts 24 font saillie à l'extérieur du corps 22, de façon à être en prise avec la tête 16a d'un assemblage lorsque le grappin à été auparavant introduit dans cette dernière.

Conformément à l'invention, le ringard de transfert 10 représenté sur la figure 1 comporte des moyens permettant d'assurer une circulation d'un liquide de refroidissement de haut en bas par gravité à l'intérieur du tube guide 12, lorsque cela est nécessaire. En d'autres termes, le ringard selon l'invention comporte des moyens permettant d'alimenter en liquide de refroidissement la partie supérieure du tube guide 12, lorsque la partie inférieure de ce dernier plonge dans le liquide de refroidissement entourant les assemblages 16 à transférer.

A cet effet, dans le mode de réalisation représenté sur la figure 1, le tube guide 12 présente une structure particulière qui va à présent être décrite.

Sur la majeure partie de sa hauteur à l'exception de son extrémité supérieure, le tube 12 est formé de deux parois coaxiales 12a et 12b définissant entre elles un espace annulaire 28. A l'extrémité inférieure du tube guide 12, la paroi intérieure 12a se prolonge au-delà de la paroi extérieure 12b en ménageant un orifice d'accès annulaire 30 par lequel débouche l'espace annulaire 28. Lorsque le ringard 10 est en position de fonctionnement, cet orifice annulaire 30 est situé en dessous du niveau du liquide de refroidissement dans lequel sont placés les assemblages 16 à manipuler.

Dans la partie supérieure du tube guide 12, la paroi intérieure 12a est raccordée sur une plaque annulaire 32 constituant le fond d'une chambre 34 formée dans la partie supérieure du tube guide, et délimitée extérieurement par la paroi extérieure 12b. La cloison 32 est traversée par des trous 36 par lesquels la chambre 34 communique avec l'espace annulaire 28.

Des moyens de pompage tels qu'une pompe électromagnétique 38 sont placés dans l'espace annulaire 28, de préférence à proximité de l'orifice d'accès inférieur 30. Cette pompe 38 constitue au moyen d'alimentation permettant d'acheminer dans la chambre 34 formée dans la partie supérieure du tube guide, au travers de l'espace annulaire 28, du liquide de refroidissement prélevé par l'orifice d'accès 30.

A partir de la chambre 34, le liquide de refroidissement s'écoule par gravité à l'intérieur du tube guide 12a, en passant par un orifice annulaire 40 délimité entre le bord intérieur de la cloison 32 et le tube de levage 18. Il est à noter que la cloison annulaire 32 fait saillie radialement vers l'intérieur au-delà de la paroi intérieure 12a du tube guide, de façon à servir de butée haute au grappin 14, comme on l'a représenté sur la partie gauche du ringard 10 sur la figure 1.

Afin que le liquide de refroidissement qui s'écoule par gravité à partir de la chambre 34 circule à l'intérieur de l'assemblage 16 suspendu au grappin 14, pour en assurer le refroidissement, le corps 22 du grappin présente une configuration particulière qui va à présent être décrite.

Dans sa partie haute, le corps 22 forme un réceptacle 42 surmontant le grappin 14 proprement dit. Plus précisément, le réceptacle 42 est un réceptacle annulaire formé entre le tube 18 et une partie supérieure tubulaire 22a du corps 22. Des trous 44 formés dans le fond de réceptacle 42 font communiquer ce dernier avec une chambre centrale 46 formée dans le corps 22 du grappin. Cette chambre 46 communique elle-même avec l'intérieur de l'assemblage 16 suspendu au grappin par des passages 48 formés dans le fond du corps 22.

En outre, le corps 22 du grappin, surmonté par le réceptacle 42, est reçu à l'intérieur de la paroi 12a du tube guide 12 avec un jeu radial déterminé, et le bord supérieur de la partie tubulaire 22a du corps du grappin vient en appui contre la partie en saillie de la cloison annulaire 32 lorsque le grappin est en position haute.

Grâce à cette disposition, lorsque la pompe 38 est actionnée alors que l'assemblage 16 n'est pas entière ment escamoté à l'intérieur du tube guide, cet assemblage est aspergé par le fluide de refroidissement admis dans la chambre 34, à la fois intérieurement et extérieurement. Cette situation correspond à l'extraction de l'assemblage 16 du coeur d'un réacteur ou à son introduction. Elle est illustrée dans la partie droite du ringard 10 sur la figure 1.

Au contraire, lorsque la partie tubulaire 22a du corps du grappin est en contact semi-étanche avec la cloison annulaire 32 du tube guide, le liquide de refroidissement acheminé dans la chambre 34 alimente intérieurement l'assemblage 16 suspendu au grappin 14. Cette situation est représentée dans la partie gauche du ringard 10 sur la figure 1. Elle correspond à la phase de transfert proprement dite de l'assemblage.

Si on appelle Q1 le débit de la pompe 38, ce débit se répartit en totalité entre l'intérieur et l'extérieur de l'assemblage lorsque celui-ci n'est pas en position haute dans le tube guide.

Pendant la phase de transfert, c'est-à-dire lorsque l'assemblage est logé en totalité dans le tube guide, le débit Q1 doit être suffisant pour immerger en totalité le faisceau d'aiguilles de combustible nucléaire 16a de l'assemblage 16 correspondant. Pour parvenir à ce résultat, le débit Q1 doit être au moins assez élevé pour maintenir plein de liquide de refroidissement le réceptacle 42. La hauteur de ce réceptacle est déterminée en fonction de la perte de charge définie par le faisceau d'aiguilles 16a à l'intérieur du tube hexagonal 16b délimitant extérieurement l'assemblage 16.

Dans la pratique, le débit Q1 du liquide de refroidissement refoulé par la pompe 38 dans l'espace annulaire 28 est de préférence supérieur au débit Q2 du métal liquide traversant effectivement l'assemblage 16, afin d'éviter tout risque de dénoyage du faisceau d'aiguilles 16a de ce dernier. Le surplus de liquide alors acheminé dans la chambre 34 par la pompe 38 est alors évacué par des orifices de déversement 50 formés dans la paroi extérieure 12b du tube guide, à la partir supérieure de la chambre 34.

On comprend aisément que la pompe électromagnétique 38 peut être remplacée par tout moyen de pompage équivalent tel qu'une pompe mécanique. Avantageusement, des moyens de pompage redondants de grande fiabilité et de préférence diversifiés sont d'ailleurs prévus, pour garantir la permanence du refroidissement de l'assemblage en cours de transfert.

Dans le même esprit, des moyens de mise en dépression de la chambre 34, ayant pour effet d'aspirer le liquide de refroidissement dans cette chambre, peuvent être prévus en ultime secours en cas de défaillance des systèmes de pompage. Il est à noter que l'utilisation de tels moyens de mise en dépression suppose que les orifices de déversement 50 sont soit supprimés, soit réalisés de façon particulière, afin de permettre la mise en dépression de la chambre 34.

Bien entendu, les moyens de pompage ainsi que les moyens de mise en dépression lorsqu'ils existent peuvent ne pas être actionnés en permanence lors du transfert d'un assemblage. Leur actionnement n'intervient alors que lorsque la durée du transfert devient trop longue, par exemple en raison d'une avarie au cours de la manutention d'un assemblage.

Le ringard de transfert 10 qui vient d'être décrit en se référant à la figure 1 peut avantageusement être utilisé dans un réacteur nucléaire à neutrons rapides, afin de permettre une réduction de la hauteur de la cuve de ce réacteur.

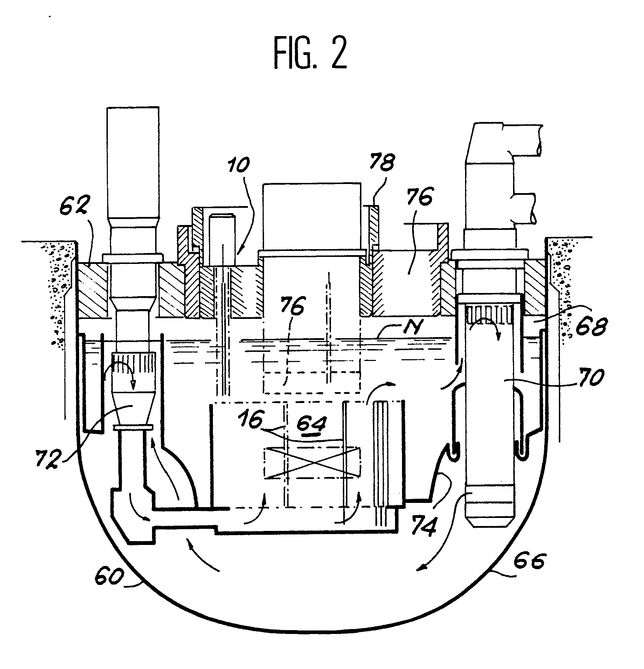

La structure générale d'un réacteur à neutrons rapides de type intégré étant connue, un tel réacteur comportant un ringard de transfert conformément à l'invention va a présent être décrit brièvement en se référant à la figure 2.

De façon classique, le réacteur nucléaire à neutrons rapides représenté sur la figure 2 comprend une cuve 60, d'axe vertical, obturée à son extrémité supérieure par une dalle de fermeture 62. Dans sa partie centrale, la cuve 60 contient le coeur 64 du réacteur, formé d'assemblages 16 justaposés. La cuve 60 est remplie d'un métal liquide 66 tel que du sodium, surmonté par une couverture de gaz neutre 68.

De façon également connue, des échangeurs de chaleur 70 et des pompes 72, suspendus à la dalle 62, sont placés dans la partie périphérique de la cuve 60. Cette dernière est divisée intérieurement en deux parties par une cuve interne 74, afin de séparer le métal liquide relativement chaud sortant au-dessus du coeur 64 du réacteur, du métal liquide relativement froid rejeté à l'extrémité inférieure des échangeurs 70, comme l'illustrent les flèches sur la figure 2. La circulation du métal liquide entre le coeur 64 et les échangeurs 70 est assurée par les pompes 72.

Dans sa partie centrale surplombant le coeur 64 et une zone située à la périphérie de ce dernier, la dalle de fermeture 62 comporte de façon également connue un ensemble de deux bouchons tournants 76 et 78 imbriqués l'un dans l'autre de façon excentrique. Les rotations combinées de ces deux bouchons tournants permettent d'amener successivement un ringard de transfert 10, monté dans le petit bouchon tournant 78 et réalisé conformément à l'invention, à la verticale de l'un quelconque des assemblages 16 du coeur et à la verticale d'un poste de déchargement 79 situé généralement à l'extérieur du coeur 64.

Grâce à l'utilisation d'un ringard de transfert 10 conforme à l'invention pour effectuer la manutention des assemblages neufs et irradiés entre le poste de déchargement précité et le coeur du réacteur, la distance séparant verticalement la face inférieure de la dalle 62 de la face supérieure du coeur 64 peut être rendue inférieure à la longueur des assemblages 16 constituant ce dernier.

En effet, l'utilisation d'un ringard droit implanté dans le petit bouchon 78 permet d'escamoter la partie supérieure de l'assemblage qui se trouve dans le tube guide dans l'épaisseur du petit bouchon tournant, comme l'illustre très schématiquement la figure 2. De plus, la circulation de liquide de refroidissement qui peut être assurée dans le ringard 10 selon l'invention permet de transférer des assemblages irradiés à forte puissance résiduelle sans qu'il soit nécessaire que la niveau du métal liquide 66 dans la cuve 60 en cours de manutention se trouve au-dessus du niveau supérieur de la partie fissile de l'assemblage en cours de transfert.

La détermination du niveau N du métal liquide 66 à l'intérieur de la cuve 60, pendant le fonctionnement du réacteur, dépend de plusieurs paramètres. Ce niveau peut conditionner la hauteur de la cuve 60 indépendamment des astreintes de manutention. Si à titre d'exemple, et pour illustrer les possibilités de réduction de hauteur du bloc réacteur offerte par l'invention, on ne prend en compte que les astreintes de manutention on peut obtenir la réduction suivante. En choisissant arbitrairement le niveau N du métal liquide 66 de telle sortie qu'à 180°C, qui est la température de manutention, la plaque du couvercle coeur 76 soit immergée le niveau N à 180°C se trouve environ à 1,5 m au-dessus du plan supérieur du coeur 64. A partir de ce niveau de référence, le niveau de la face inférieure de la dalle 62 est déterminé en tenant compte de l'élévation du niveau N du métal liquide dans le collecteur chaud due à sa dilatation par échauffement lors du fonctionnement du réacteur, et de la hauteur de la couverture d'argon 68. Une comparaison avec les réacteurs nucléaires à neutrons rapides de conception classique montre que la hauteur de la cuve 60 se trouverait ainsi réduite d'environ 3 m.

Dans ces conditions, le maintien des performances du réacteur impose une légère augmentation de diamètre des échangeurs 70 et, par conséquent, de la cuve 60. Cependant, le gain apporté par la réduction de hauteur de l'ensemble du bloc réacteur et de ses principaux composants tels que la cuve 60, les pompes, le couvercle coeur, etc. est supérieur à la perte due à l'augmentation du diamètre, de sorte que le bilan global de l'implantation du ringard de transfert 10 selon l'invention dans un réacteur à neutrons rapides est largement positif du point de vue du coût total du réacteur. A cela s'ajoute la réduction de hauteur du bâtiment réacteur qui est le double de celle du bloc réacteur, soit 6 m de réduction dans le cas de l'exemple précité.

Par ailleurs, le procédé peut être adapté au système de déchargement des assemblages en gaz en vue de leur évacuation du réacteur. Il permet d'assurer la permanence du refroidissement des assemblages notamment en cas de panne de levage lorsque le pied de l'assemblage est encore immergé alors que les aiguilles sont en gaz. Dans cette situation la mise en service de la pompe permet de refroidir les aiguilles.

Par ailleurs, il est clair que si le ringard de transfert selon l'invention est principalement conçu pour assurer la manutention des assemblages irradiés, il permet aussi de transférer des assemblages neufs, dans des conditions analogues à celles d'un ringard droit classique.

Enfin, le tube guide à double paroi peut être remplacé par un tube guide à simple paroi supportant une ou plusieurs canalisations verticales débouchant à la fois à la partie basse du tube guide, et dans la partie supérieure de ce dernier.

**Revendications**

1. Ringard de transfert d'assemblages de combustible nucléaire, comprenant un tube guide vertical (12) dans lequel coulisse un grappin (14), caractérisé par le fait que des moyens d'alimentation (38) sont prévus pour acheminer un liquide de refroidissement dans une partie supérieure (34) du tube guide, afin que ce liquide s'écoule par gravité dans un assemblage (16) suspendu au grappin et placé dans le tube guide.

2. Ringard selon la revendication 1, caractérisé par le fait que le tube guide (12) comprend deux parois coaxiales (12a, 12b) définissant entre elles un espace annulaire (28) par lequel lesdits moyens d'alimentation (38) acheminent le liquide de refroidissement dans la partie supérieure (34) du tube guide.

3. Ringard selon la revendication 2, caractérisé par le fait que ledit espace annulaire (28) débouche dans une chambre (34) formée dans la partie supérieure du tube guide, cette chambre étant délimitée vers le bas par une plaque annulaire (32) servant de butée haute au grappin (14) à l'intérieur du tube guide.

4. Ringard selon la revendication 3, caractérisé par le fait que le grappin (14) est surmonté par un réceptacle (42) reçu avec un jeu déterminé à l'intérieur du tube guide (12) et dont un bord supérieur est en appui sur ladite plaque annulaire (32) lorsque le grappin est en position haute, des passages (44, 46, 48) étant prévus dans le fond du réceptacle pour faire communiquer ce dernier avec l'intérieur d'un assemblage (16) suspendu au grappin.

5. Ringard selon l'une quelconque des revendications précédentes, caractérisé par le fait que des orifices de déversement (50) sont formés dans le tube guide (12), pour définir un niveau maximum de liquide dans ladite partie supérieure (34) de ce dernier.

6. Ringard selon l'une quelconque des revendications précédentes, caractérisé par le fait que les moyens d'alimentation comprennent des moyens de pompage (38) aptes à refouler le liquide de refroidissement dans la partie supérieure (34) du tube guide.

7. Ringard selon l'une quelconque des revendications précédentes, caractérisé par le fait que les moyens d'alimentation comprennent des moyens de mise en dépression de la partie supérieure (34) du tube guide, aptes à aspirer le liquide de refroidissement dans cette partie supérieure.

8. Réacteur nucléaire comprenant une cuve (60) obturée par une dalle horizontale (62) cette cuve contenant des assemblages de combustible nucléaire (16) juxtaposés, formant le coeur (64) du réacteur, ainsi qu'un liquide de refroidissement (66) dans lequel sont noyés ces assemblages, au moins un système de transfert étant suspendu à la dalle, par l'intermédiaire d'un mécanisme (76, 78) apte à déplacer ce système entre une position située à la verticale d'un assemblage et une position située à la verticale d'un poste de déchargement, caractérisé par le fait que le système de transfert est un ringard (10) conforme à l'une quelconque des revendications 1 à 7 et que les assemblages (16) ont une longueur supérieure à la distance séparant la dalle (62) de la face supérieure du coeur (64).

EP 0 363 266 A1

FIG. 1

# FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 086 839  (WESTINGHOUSE)<br>* Figure 2; page 1, colonne de gauche, lignes 9-12; page 1, colonne de droite, lignes 93-107; revendication 4 * | 1 | G 21 C   19/10 |
| A | | 2 | |
| Y | FR-A-2 373 858  (WESTINGHOUSE)<br>* Figure 1; page 3, lignes 14-29; page 11, lignes 4-8 * | 1 | |
| A | | 2 | |
| A | GB-A-1 023 584  (UKAEA)<br>* Figures 1-3; page 4, colonne de gauche, lignes 21-34; page 4, colonne de droite, lignes 73-109 * | 7,8 | |
| A | EP-A-0 148 802  (CEA ET ELECTRICITE DE FRANCE)<br>* Figures 1,2,8; page 4, lignes 7-18; page 14, lignes 5-7; page 21, lignes 15-30 * | 1,3,6,8 | |
| A | GB-A-1 097 918  (GFK KARLSRUHE)<br>* Figures 1,2; page 3, colonne de droite, lignes 67-74; revendications 1,2 * | 1,4,5,7 | DOMAINES TECHNIQUES RECHERCHES (Int. Cl.5)<br><br>G 21 C |
| A | DE-A-1 055 705  (SIEMENS-SCHUCKERT)<br>* Figure 1, colonne 2, lignes 45-53 * | 5 | |

Le présent rapport a été établi pour toutes les revendications

| Lieu de la recherche | Date d'achèvement de la recherche | Examinateur |
|---|---|---|
| LA HAYE | 05-12-1989 | FRITZ S.C. |